# FASCICULE DE BREVET EUROPEEN

(11) **EP 3 501 737 B1**
(45) Date de publication et mention de la délivrance du brevet: **15.04.2020**
(21) Numéro de dépôt: 18209110.8
(22) Date de dépôt: 29.11.2018
(51) Int. Cl.: B25B 5/14, B25B 27/10, F16L 21/035

(54) **OUTIL ET PROCEDE D'INSTALLATION D'UN JOINT D ETANCHEITE EN PERMETTANT UNE PRE-COMPRESSION POUR ASSEMBLER DEUX PIECES TUBULAIRES**
WERKZEUG UND VERFAHREN ZUM EINBAUEN EINER DICHTUNGSFUGE DURCH ERMÖGLICHEN EINER VORPRESSUNG ZUM ZUSAMMENBAU VON ZWEI ROHRFÖRMIGEN TEILEN
TOOL AND METHOD FOR INSTALLING A SEAL ALLOWING PRE-COMPRESSION FOR ASSEMBLING TWO TUBULAR PARTS

(30) Priorité: 19.12.2017 FR 1762474
(43) Date de publication de la demande: 26.06.2019
(73) Titulaire: Airbus Operations S.A.S., 31060 Toulouse (FR); Airbus Operations Limited, Bristol BS34 7PA (GB)
(72) Inventeur: ANTIC, Joël, 31530 LASSERRE (FR); CHARMES, Nicolas, 82100 CASTELSARRASIN (FR); FRAYSSE, Damien, 31700 MONDONVILLE (FR); GOURDON, Sophie, 31700 BLAGNAC (FR); PETIT, David, PORTISHEAD, BS20 7LF (GB); SCHUBETZER, Geneviève, 31770 COLOMIERS (FR); TRINDADE, Mathieu, 31650 LAUZERVILLE (FR); VERNET, Serge, 82170 POMPIGNAN (FR)
(74) Mandataire: Gicquel, Olivier Yves Gérard

(56) Documents cités:
- EP-A2- 2 336 625
- EP-A2- 2 596 913
- FR-A1- 3 048 052

## Description

La présente invention concerne un outil d'installation de joint destiné à assurer l'étanchéité entre des pièces tubulaires ainsi que le procédé d'installation utilisant cet outil. Plus particulièrement, la présente invention s'applique à des joints d'étanchéité annulaires aptes à s'interposer entre différents types de pièces tubulaires destinées à s'accoupler tels que par exemple un tuyau avec un raccord, un embout femelle avec un embout mâle. Elle trouve notamment application dans le domaine de la fabrication des aéronefs ainsi que de la maintenance de ces derniers.

### DOMAINE TECHNIQUE

Selon une application particulière, des joints d'étanchéité sont largement utilisés à bord des aéronefs. Ils assurent notamment l'étanchéité entre les pièces formant les canalisations de transport de fluide.

Lors de l'installation à l'aveugle d'un joint au cours d'un accouplement de tuyauterie, le déplacement d'une pièce par rapport à une autre peut entrainer un effet non désiré sur le joint d'étanchéité prévu entre celles-ci altérant l'étanchéité, comme par exemple un vrillage, un pincement, un endommagement, une déformation, une modification d'une ou plusieurs caractéristiques physiques. Des spécificités propres aux pièces assemblées peuvent augmenter les risques de cet effet ou de ces effets sur le joint. Ainsi par exemple, l'extrémité de certaines pièces formant canalisation est chanfreinée intérieurement. Plus la pente du chanfrein est importante, plus les risques du ou des effets altérant l'étanchéité sont accentués. Selon un autre exemple, un joint peut être positionné dans une gorge d'un tuyau prévue pour le recevoir par étirement. Or il arrive que le joint roule sur lui-même et subisse d'autres effets comme ceux donnés à titre d'exemple plus haut lors de l'assemblage des pièces à accoupler : en effet, à titre illustratif, une partie du joint faisant saillie au-delà de la gorge forme une prise susceptible avec les frottements de la surface avec laquelle le joint doit entrer en contact pour assurer l'étanchéité, de déplacer le joint.

Lorsqu'un joint subit un ou plusieurs effets du type de ceux énoncés plus haut, il n'assure plus correctement l'étanchéité.

### TECHNIQUE ANTERIEURE

Il n'existe à ce jour aucun outillage permettant d'assurer le maintien mécanique et d'éviter un effet altérant l'étanchéité sur un joint lors de son installation. De plus, la détection d'une telle modification sur le joint est difficile. En effet, le montage étant réalisé à l'aveugle, cette modification n'est pas forcément visible et ce d'autant plus que les zones dans lesquelles le joint est monté sont de visibilité réduite. Ainsi, la modification d'un joint est très souvent décelée avec l'apparition d'une fuite. De ce fait, la détection ne se fait qu'après la mise en service du système pourvu du joint. Un outil similaire peut être vu dans le document EP2596913.

La présente invention a donc pour but de proposer un nouvel outil permettant d'éviter des effets sur le joint en altérant l'étanchéité comme par exemple le vrillage ou l'endommagement de celui-ci sur toute pièce tubulaire et en particulier d'extrémité chanfreinée et pourvue d'une gorge dans laquelle le joint est installé.

### EXPOSE DE l'INVENTION

Pour ce faire, la présente invention propose un outil d'installation d'un joint d'étanchéité annulaire destiné à assurer l'étanchéité entre deux pièces tubulaires mâle et femelle, la pièce mâle étant pourvue d'une gorge dans laquelle le joint est inséré et l'extrémité de la pièce femelle étant chanfreinée, caractérisé en ce que l'outil comprend un collier de serrage présentant une face intérieure cylindrique de surface plane formant un anneau dit de compression destinée à encercler la pièce mâle au moins au niveau de la gorge et à exercer une compression sur le joint, les deux extrémités du collier étant l'une appelée extrémité femelle car destinée à venir en contact avec la pièce femelle et l'autre extrémité mâle, l'extrémité femelle du collier présentant une languette en saillie vers l'extérieur dont l'une des faces fait partie de la face intérieure cylindrique du collier, la languette présentant une forme lui permettant de venir en contact avec la surface chanfreinée de la pièce femelle.

La languette permet d'offrir au joint pré-comprimé aux dimensions de la pièce femelle une course continue permettant d'empêcher tout vrillage ou autre effet altérant l'étanchéité.

L'outil d'installation présente au moins l'une des caractéristiques optionnelles suivantes, prises isolément ou en combinaison.

La languette présente une forme telle que l'extrémité de la languette affleure la surface intérieure de la pièce femelle au-delà de la surface chanfreinée lorsque l'outil est installé sur la pièce femelle et que la languette est en contact avec la surface chanfreinée de la pièce femelle.

Le diamètre intérieur de l'extrémité de la languette est identique au diamètre intérieur de la pièce femelle.

La languette présente une forme de prisme à angle droit dont la face latérale plane opposée à l'angle droit est destinée à venir en contact avec la surface chanfreinée.

Le collier présente une face intérieure tronconique dont le rayon décroît depuis l'extrémité mâle jusqu'à la face cylindrique.

Il comprend un socle indépendant du collier présentant une forme permettant de maintenir le collier dans une position permettant l'accouplement avec la pièce mâle et une surface plane de base permettant de reposer sur une surface de manière telle que l'axe X-X de l'anneau soit perpendiculaire au plan de ladite surface.

Le socle présente une cavité de forme complémentaire à un appendice prévu sur l'extrémité femelle du collier de manière à maintenir le collier en position sur le socle.

Au moins deux pattes de guidage sont prévus régulièrement répartis en périphérie du collier.

Au moins les faces cylindrique et tronconique du collier sont en matériau transparent.

Le collier de serrage comprend au moins deux portions articulées entre elles et reliées par un mécanisme de fermeture/ouverture.

La présente invention concerne également un procédé d'installation d'un joint d'étanchéité annulaire destiné à assurer l'étanchéité entre deux pièces tubulaires mâle et femelle, la pièce mâle étant pourvue d'une gorge dans laquelle le joint est inséré et l'extrémité de la pièce femelle étant chanfreinée, caractérisé en ce que le procédé comprend les étapes suivantes :
- compression du joint installé sur la pièce mâle à l'aide d'un outil comprenant un collier de serrage présentant une face intérieure cylindrique de surface plane formant un anneau dit de compression destinée à encercler la pièce mâle au moins au niveau de la gorge et à exercer une compression sur le joint, les deux extrémités du collier étant l'une appelée extrémité femelle car destinée à venir en contact avec la pièce femelle et l'autre extrémité mâle ;
- insertion de la pièce mâle dans la pièce femelle à l'aide du collier dont l'extrémité femelle présente une languette en saillie vers l'extérieur dont l'une des faces fait partie de la face intérieure cylindrique du collier, la languette étant mise en en contact avec la surface chanfreinée de la pièce femelle.

Selon une caractéristique optionnelle, le procédé d'installation comprend une étape de préparation préliminaire dans laquelle le collier est positionné fermé sur un socle avant l'étape de compression du joint obtenu par l'introduction de la pièce mâle à l'intérieur du collier.

### DESCRIPTION SOMMAIRE DES DESSINS

D'autres buts, avantages et caractéristiques de l'invention apparaîtront à la lecture de la description de l'invention qui va suivre, donnée à titre d'exemple non limitatif en référence aux dessins ci-annexés dans lesquels :
- la figure 1 représente une vue en perspective de deux pièces tubulaires destinées à être emboîtées l'une dans l'autre ;
- la figure 2 représente une vue en perspective des pièces tubulaires représentées sur la figure 1 emboitées l'une dans l'autre à l'aide d'un collier d'un outil selon la présente invention ;
- la figure 3 représente une vue en coupe partielle schématique de la zone d'emboitement lorsque la pièce tubulaire mâle représentée sur la figure 2 est insérée à l'intérieur du collier de l'outil à l'aide d'un socle faisant également partie de l'outil d'installation du joint dans le cas d'un assemblage faisant appel à une étape intermédiaire d'installation de type préparation préliminaire de la pièce tubulaire mâle dans le collier ;
- la figure 4 représente une vue en coupe longitudinale partielle schématique de la zone d'emboitement lorsque la pièce mâle associé au collier est introduite à l'intérieur de la pièce femelle ;
- la figure 5 représente une vue en coupe longitudinale partielle schématique de la zone d'emboitement lorsque la pièce mâle associé au collier a pénétré à l'intérieur de la pièce femelle ;
- la figure 6 représente une vue en coupe longitudinale partielle schématique de la zone d'emboitement lorsque les pièces tubulaires sont emboitées l'une à l'autre et que le collier a été dissocié de celles-ci ;
- la figure 7 représente une vue en perspective d'un socle reposant sur une surface dans lequel le collier est maintenu ;
- la figure 8 représente une vue en perspective dans laquelle la partie tubulaire mâle est introduite dans le collier maintenu par le socle ;
- la figure 9 représente une vue en perspective dans laquelle la partie tubulaire mâle a pénétré à l'intérieur du collier maintenu par le socle ;
- la figure 10 représente une vue en coupe longitudinale de l'ensemble représenté sur la figure 9 ;
- la figure 11 représente une vue agrandie de la zone relative au collier et son environnement proche représenté sur la figure 10 ;
- les figures 12 et 13 représentent une vue en coupe partielle des pièces tubulaires emboitées l'une dans l'autre, le collier étant encore en place sur l'une et retiré sur l'autre ;
- la figure 14 représente une vue en perspective d'une forme de réalisation du collier différente de celle représentée sur les figures précédentes utilisé pour un assemblage sans étape intermédiaire ;
- la figure 15 représente une vue agrandie partielle du collier représenté sur la figure 14 ;
- les figures 16 à 19 représentent des vues en perspective de différentes étapes d'assemblage direct d'une pièce tubulaire à une autre en utilisant le collier représenté sur les figures 14 et 15.

### MANIERE DE REALISER L'INVENTION

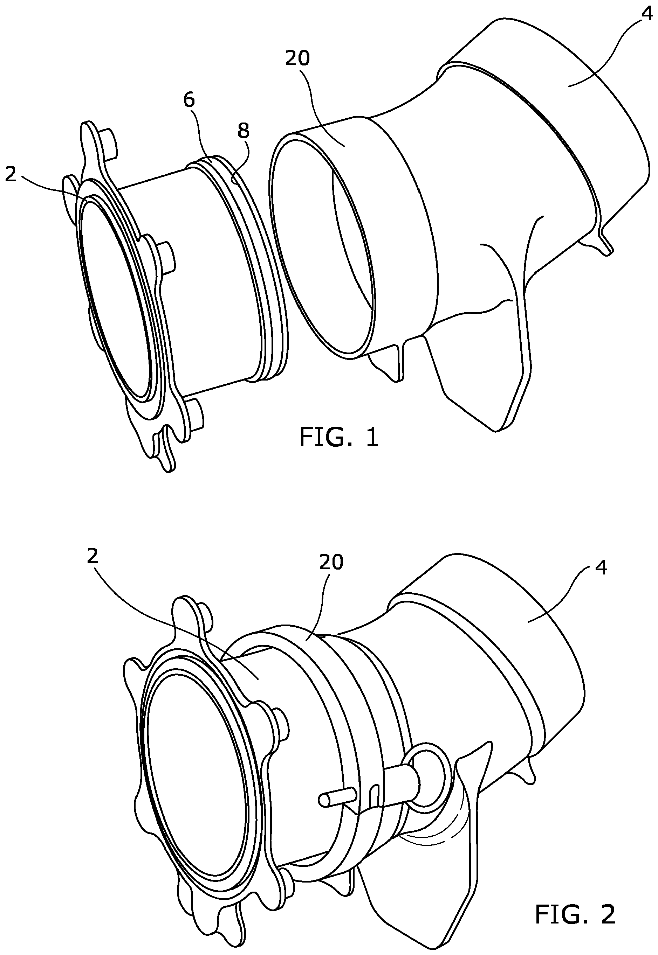

Comme montré sur les figures 1 et 2, la présente invention se rapporte à l'accouplement d'une pièce 2 tubulaire mâle à l'intérieur d'une pièce 4 tubulaire femelle de tout type et plus précisément à l'installation d'un joint 6 d'étanchéité annulaire entre les pièces tubulaires accouplées. Le terme « pièce tubulaire » est pris dans un sens très générique puisqu'il recouvre aussi bien un conduit, tube, embout, connecteur ... à savoir tout élément tubulaire destiné à s'accoupler avec un autre élément tubulaire par emmanchement, emboitement ou équivalent. La pièce tubulaire est destinée à tout type d'applications, à tout type de fluides comme de l'eau, de l'huile, de l'air, de l'oxygène ou autre. Le terme « annulaire » recouvre une définition générique à savoir toute forme refermée sur elle-même comme celle d'un tore par exemple. Le joint peut présenter tout type de section ; il peut s'agir par exemple d'un joint de section en O, en D, quadrilobe, ou autre ... Il peut être lubrifié ou non lubrifié.

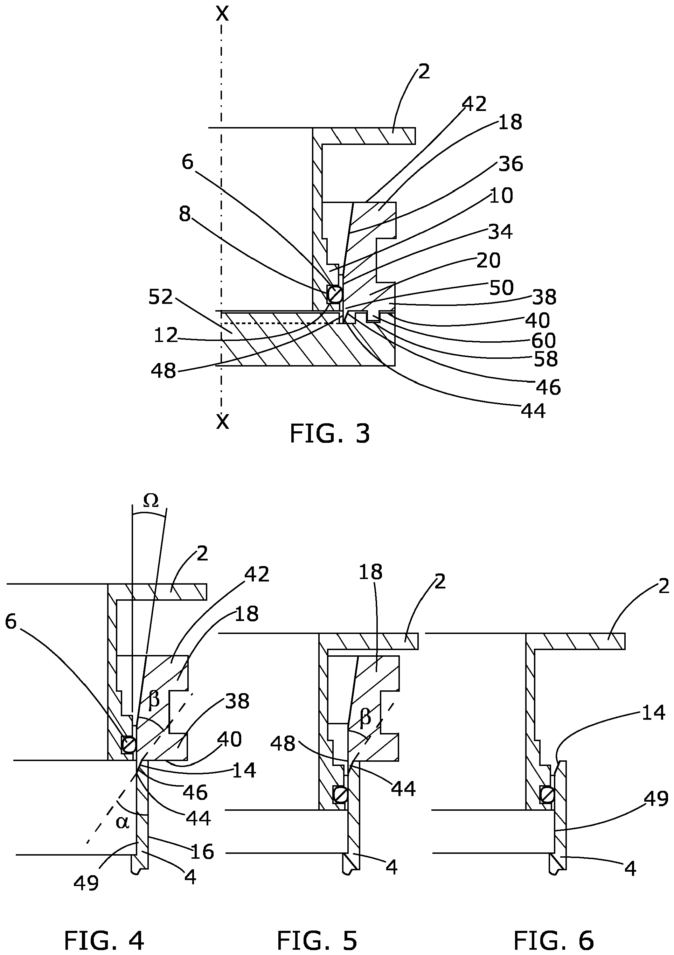

Dans les formes de réalisation illustrées sur les figures 1 à 19, il est pris l'exemple de l'installation d'un joint annulaire en O à savoir annulaire de section circulaire entre un embout 2 mâle et un tube 4 femelle. Comme montré sur la figure 1, le joint 6 annulaire est pré-installé dans une gorge 8 externe de l'embout 2 mâle. Le joint 6 est inséré et maintenu en place entre les deux flancs 10, 12 de la gorge 8 visibles sur la figure 3. L'extrémité libre du tube 4 femelle destinée à venir entourer l'extrémité libre de l'embout mâle présente une surface 14 chanfreinée (voir figure 4) ; plus l'angle α entre la surface 16 extérieure du tube 2 et la surface 14 chanfreinée est importante, plus les risques d'effets altérant l'étanchéité comme par exemple le vrillage, l'endommagement, le pincement, la déformation et/ou la modification d'une ou de plusieurs propriétés physiques du joint augmentent. Dans la forme de réalisation illustrée, l'angle α varie entre entre 20 et 30 degrés.

Comme montré sur les figures 2 à 6, l'outil 18 d'installation comprend un collier 20 de serrage annulaire destiné à encercler la pièce 2 tubulaire mâle à savoir ici l'embout 2 mâle pour exercer un effort de compression sur le joint 6 installé dans la gorge 8. L'outil 18 permet ainsi de réaliser l'accouplement entre les pièces tubulaires mâle 2 et femelle 4 avec un joint 6 pré-comprimé comme représenté plus précisément sur les figures 4 et 5. Le terme pré-comprimé est utilisé pour signifier que le joint est comprimé avant d'être comprimé par l'emboitement des pièces tubulaires entre elles lors de leur accouplement. La compression met le joint 6 aux dimensions finales qu'il prendra une fois installé à l'intérieur de la pièce 4 femelle (représenté sur la figure 6) ce qui permet d'effacer tout bossage ou relief lors de l'insertion d'une pièce dans l'autre formant prise et susceptible de provoquer un effet de type par exemple vrillage, déformation, endommagement du joint. La dimension finale du joint comprimé correspond au diamètre interne de la pièce 4 femelle au niveau où le joint est en contact avec la pièce femelle au-delà de la surface chanfreinée.

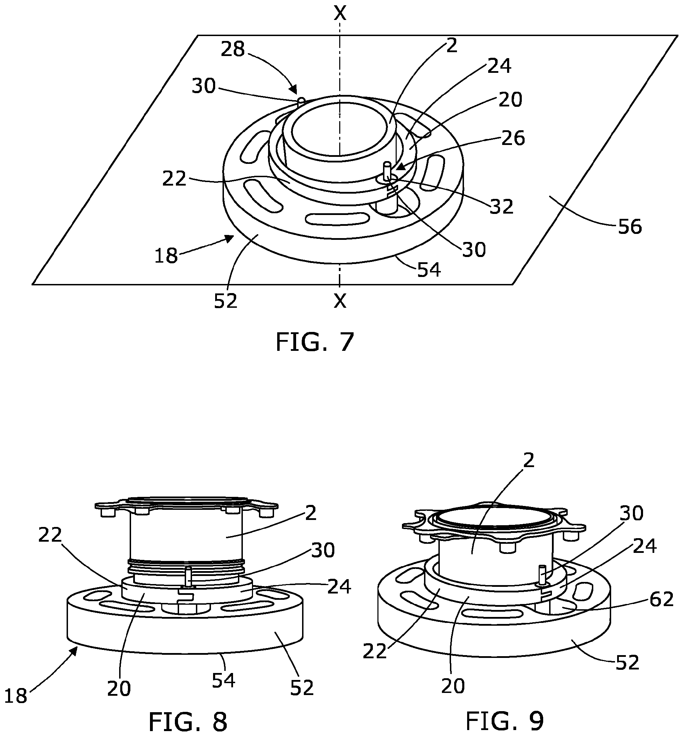

Comme bien visible sur la figure 7 présentant une forme de réalisation possible de l'outil, le collier 20 comporte au moins deux portions 22, 24 articulées entre elles, deux à deux, deux d'entre elles étant reliées par un mécanisme 26 de fermeture/ouverture. Le collier 20 entoure la pièce 2 tubulaire mâle, à savoir dans l'exemple illustré l'embout 2 mâle. L'ouverture/fermeture du collier 20 par l'intermédiaire du mécanisme 26 de fermeture permet de monter/démonter le collier 20 autour de la pièce tubulaire sans avoir à la démonter et garantit le maintien du diamètre souhaité.

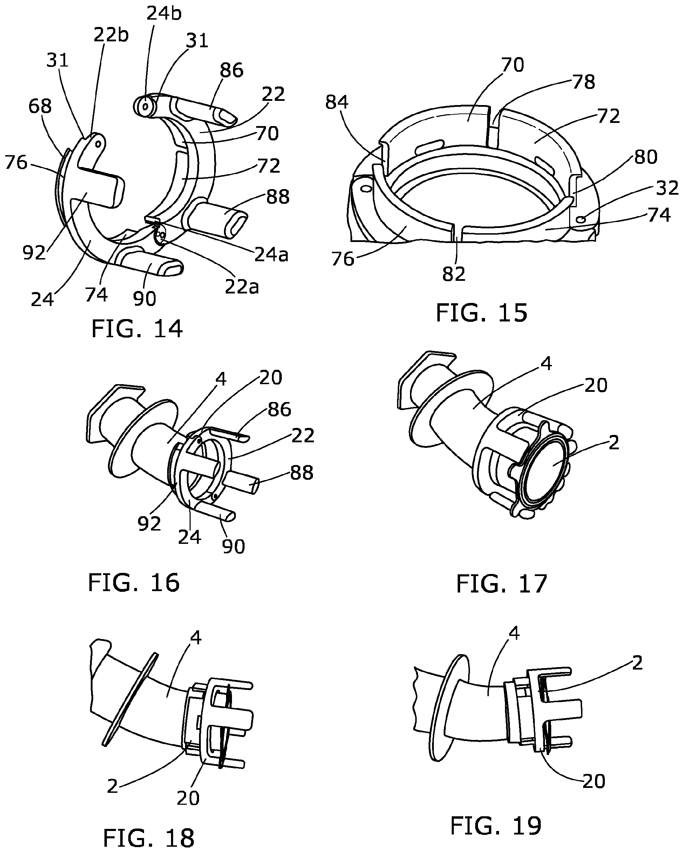

Dans la forme de réalisation illustrée sur la figure 7, le collier 20 comprend deux portions 22, 24 s'étendant en demi-cercle. L'une des extrémités 22a, 24a des portions 22, 24 sont reliées entre elles de manière articulée par une liaison 28 pivotante : la liaison 28 pivotante est réalisée à l'aide d'un axe 30 inséré dans un orifice prévu en correspondance dans les extrémités susmentionnées des portions 22, 24 permettant aux portions 22, 24 de pivoter l'une par rapport à l'autre autour de l'axe 30 : en l'espèce, l'axe 30 est ici une goupille. L'autre extrémité libre 22b, 24b des portions 22, 24 est reliée par le mécanisme 26 de fermeture/ouverture de tout type et par exemple à attache rapide comme une fermeture à sauterelle ou une grenouillère ou à mécanisme plus simple à goupille 30 comme dans la forme de réalisation illustrée. Le mécanisme 26 peut être doublé par un deuxième mécanisme de fermeture/ouverture complémentaire pour éviter qu'avec l'usure du premier mécanisme, il se crée un jeu qui modifierait le diamètre du collier 20. Comme représenté sur la figure 14, les extrémités libres 22b, 24b des portions 22, 24 sont pourvues d'une butée 31 mécanique de manière à bloquer le mouvement d'une extrémité de portion vers l'autre lors de la fermeture. La butée 31 permet de bloquer les portions 22, 24 en position de fermeture. Dans la forme illustrée sur la figure 14, les extrémités libres 22b, 24b des portions 22, 24 présentent une épaisseur réduite de manière complémentaire de manière à venir se superposer. La butée 31 est formée par le passage entre l'épaisseur réduite de l'extrémité libre 22b, 24b et l'épaisseur des portions 22 et 24 en dehors des extrémités. Les extrémités libres 22b, 24b des portions 22, 24 présentant une forme de disque, la butée 31 présente une forme partiellement circulaire.

Dans la forme de réalisation illustrée, le collier 20 est réalisé aux dimensions de l'embout mâle auquel il s'applique. Il n'est donc pas nécessaire de régler la dimension du diamètre du collier 20 et de ce fait, la liaison 28 pivotante et le mécanisme 26 de fermeture/ouverture sont réalisés de la même façon par un système d'attache à goupille 30 : une goupille 30 est insérée dans des orifices 32 correspondants réalisés dans les portions 22, 24. La force de traction exercée par la fermeture du collier 20 est convertie en effort de compression sur le joint 6 placé sur la pièce 2 tubulaire mâle.

Comme illustré sur les figures 3, 10 et 11, la partie intérieure du collier 20 annulaire de serrage destinée à venir en vis-à-vis et au contact de la pièce 2 tubulaire mâle comprend une paroi ou face 34 cylindrique de section circulaire de surface plane et une paroi ou face 36 tronconique adjacente dans la direction longitudinale du collier associé à la pièce 2. Le collier 20 au niveau de la partie 34 cylindrique forme un anneau 38 dit de compression autour d'un axe X-X de révolution, axe se trouvant dans la direction longitudinale du collier 20 et de la pièce 2. L'axe X-X est également axe de révolution pour la partie 36 tronconique. Un plan perpendiculaire à l'axe X-X est appelé dans ce qui suit plan radial. L'anneau 38 de compression est destiné à encercler la pièce 2 tubulaire mâle au moins au niveau de la gorge 8 et à exercer une compression sur le joint 6 mis en place dans la gorge 8. Comme il sera vu plus loin, l'assemblage peut être réalisé en une seule étape dans laquelle l'anneau 38 est directement appliqué sur la pièce tubulaire 2 mâle ou avec une étape intermédiaire dans laquelle la pièce 2 est introduite à l'intérieur du collier 20.

Comme représenté sur les figures 3 à 6, les deux extrémités 40, 42 du collier 20 dans la direction de l'axe X-X, représentées par deux surfaces 40, 42 planes se trouvant chacune dans un plan radial sont l'une appelée extrémité 40 femelle car destinée à venir en contact avec la pièce tubulaire femelle et l'autre extrémité 42 mâle. L'extrémité 40 femelle du collier 20 présente une languette 44, en saillie vers l'extérieur par rapport au plan radial de l'extrémité 40 femelle.

Lors de l'accouplement de la pièce tubulaire mâle à l'intérieur de la pièce tubulaire femelle, la languette 44 de l'outil 18 qui enserre la pièce tubulaire mâle vient en contact contre la surface 14 chanfreinée de la pièce tubulaire femelle et compte-tenu de sa forme complémentaire permet de guider le joint 6 comprimé vers la surface intérieure non chanfreinée de la pièce tubulaire femelle en conservant ses dimensions tout au long de l'installation et évitant ainsi tout incident. L'outil diminue ainsi l'arête formée par le changement de surface entre la surface non chanfreinée de la pièce tubulaire mâle 2 et la surface 14 chanfreinée de la pièce tubulaire femelle 4 et permet l'insertion du joint sans effet sur le joint comme un endommagement, un changement de forme, un vrillage.

Comme montré sur le figures 3 à 5, la languette 44 présente une forme de prisme à angle droit courbe et fermé sur lui-même dont la face 46 latérale plane opposée à l'angle droit est destinée à venir en contact avec la surface 14 chanfreinée. L'une des faces 48 du prisme formant l'angle droit fait partie de la face 34 cylindrique de l'anneau 38 de compression : ladite face 48 du prisme sera appelée face intérieure. Du fait de cette forme en prisme à angle droit complémentaire à la forme de l'extrémité chanfreinée du tube femelle, lorsque la languette 44 est appliquée contre la surface 14, la face 48 intérieur est parallèle à la surface 16 extérieure du tube 2. L'autre face 50 du prisme formant l'angle droit fait corps avec le collier au niveau de son extrémité 40 se trouvant dans un plan radial.

De préférence, les dimensions de la languette et notamment l'angle β formé entre la face 48 intérieure et la face 46 latérale sont adaptées aux dimensions de la surface 14 chanfreinée de la pièce tubulaire femelle de manière que le maximum de la surface de la face 46 latérale de la languette 44 soit en contact avec la surface 14 chanfreinée : le but est que la face 46 intérieure de la languette vienne affleurer la surface 49 intérieure de la pièce tubulaire femelle se trouvant au-delà de la surface 14 chanfreinée pour ne former qu'une seule surface lors de l'insertion du joint à l'intérieur de la pièce tubulaire femelle. Ainsi, dans la présente invention, selon une forme de réalisation illustrative, l'angle β est identique à l'angle α et compris entre 20 et 30 degrés.

Comme vu précédemment, la partie intérieure du collier 20 présente une face 36 tronconique dont le rayon décroît depuis l'extrémité 42 mâle jusqu'à la face 34 cylindrique. La face 36 tronconique permet de comprimer le joint 6 de manière graduelle. Dans le cas où le collier 20 n'est pas directement appliqué sur la pièce tubulaire mâle 2 mais que la pièce tubulaire mâle 2 est insérée à l'intérieur du collier 20, le rétrécissement de la face 36 intérieure tronconique du collier déforme le joint 6 par compression progressive jusqu'à ce qu'il parvienne à la face 34 cylindrique. La face 34 cylindrique présente des dimensions telles que la compression du joint est identique à celle exercée par la surface intérieure de la pièce tubulaire femelle. Pour ce faire, le rayon interne du collier 20 diminue jusqu'à une valeur correspondant au rayon interne au niveau de la face 34 qui doit être identique au diamètre interne de la pièce femelle au niveau où le joint est en contact avec la pièce femelle au-delà de la surface chanfreinée.

Par ailleurs, la face 36 tronconique forme un angle Ω avec la face 34. Cet angle doit offrir une pente permettant la compression progressive du joint. Selon une forme de réalisation illustrative, cet angle varie entre 5 et 20 degrés.

Comme il sera vu plus loin, l'accouplement entre les pièces tubulaires peut se faire directement ou en deux temps. Dans le cas d'un accouplement en deux temps, et comme illustré par les figures 7 à 9, l'outil 18 comprend un socle 52 indépendant du collier 20 présentant une forme permettant de maintenir le collier dans une position permettant l'accouplement avec la pièce 2 tubulaire mâle. Dans un premier temps, le procédé d'accouplement comprend une phase supplémentaire de préparation préliminaire. Cette phase comprend une étape d'installation du collier sur le socle 52 de manière que l'axe central du socle soit confondu avec l'axe X-X du collier. Dans cette étape, la pièce 2 mâle est ensuite insérée à l'intérieur du collier 20 maintenu en position par le socle 52. Lors de l'introduction de la pièce mâle, la pièce mâle s'enfile autour d'une portion du socle comme il sera vu plus loin permettant que l'axe de la pièce mâle soit confondu avec l'axe central du socle et l'axe X-X du collier afin de garantir une translation linéaire de la pièce 2 mâle suivant l'axe X-X pour conditionner le joint dans sa compression de fonctionnement. Dans une deuxième phase, la pièce 2 mâle en prise avec l'outil 18 est assemblée avec la pièce 4 tubulaire femelle. Le socle 52 est pourvu d'éléments spécifiques dans le but de faciliter la mise en place du collier 20 sur la pièce 2 tubulaire mâle.

Ainsi, comme montré sur les figures 7 à 11, le socle 52 présente une face 54 plane de base permettant de reposer sur une surface 56 plane quelconque. Le socle 52 comprend au moins une cavité 58 permettant de recevoir au moins un appendice 60 du collier 20 de forme correspondante à la cavité 58 et de maintenir le collier 20 dans une position permettant l'insertion de la pièce 2 tubulaire mâle. Lorsque le ou les appendices 60 du collier 20 sont insérés dans les cavités 58 du socle, l'axe X-X de l'anneau 38 de compression est perpendiculaire au plan de la surface 56 plane sur laquelle repose le socle 52. Ainsi la pièce 2 tubulaire mâle est insérée dans le collier 20 de telle sorte que l'axe X-X central de la pièce tubulaire se retrouve perpendiculaire à la surface 56 sur laquelle repose le socle 52. Le ou les appendices 60 permettent ainsi d'offrir à la fois la fonction de détrompage, l'opérateur ne pouvant pas se tromper de sens d'utilisation et de maintien en position du collier pour l'installation de la pièce tubulaire mâle. Des excavations 62 sont prévues dans le socle 52 pour permettre le passage d'éléments de tout type se trouvant en saillie au niveau du collier 20 et/ou de la pièce 2 tubulaire mâle comme par exemple les goupilles 30 du collier 20 et/ou l'alléger.

On considère dans la suite de la description que la surface 56 sur laquelle repose le socle 52 est horizontale et que toute direction perpendiculaire est verticale.

Le socle 52 comprend en son centre et en saillie vers l'extérieur et vers le haut (à savoir à partir de la face opposée à la face 54 de base) une portion 64 de conduit tubulaire de même forme que la pièce 2 tubulaire mâle et de diamètre légèrement inférieur de manière à permettre à ladite pièce 2 de s'enfiler autour de ladite portion 64 qui guide le déplacement. Pour engager la pièce tubulaire mâle à l'intérieur du collier, la pièce 2 tubulaire mâle est placée autour de la portion 64 de conduit.

Une butée 66 est prévue de manière à arrêter le déplacement de la pièce 2 tubulaire mâle lorsque le collier 20 est en position à savoir lorsque l'anneau 38 de compression est positionné au niveau de la gorge 8.

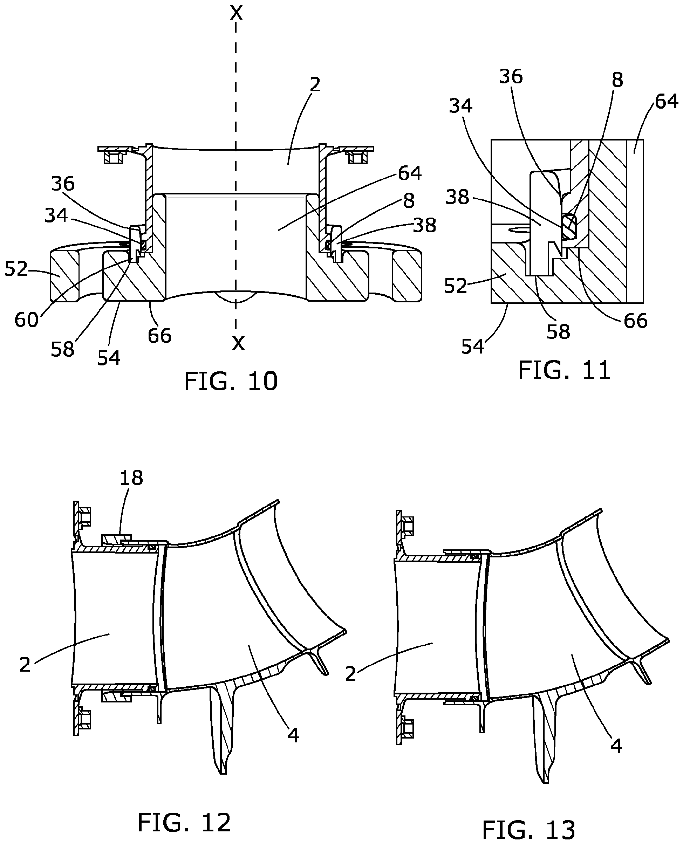

Les figures 12 et 13 représentent la deuxième étape de l'accouplement qui sera décrite plus loin.

Dans le cas d'un assemblage direct entre les pièces tubulaires représenté sur les figures 14 à 19 sans passer par une pièce intermédiaire tel que le socle 52, le collier 20 présente une jupe 68 destinée à venir s'accoler autour de la surface extérieure de la pièce tubulaire femelle pour positionner et aider au maintien du collier 20. La jupe 68 peut être continue sur toute la périphérie du collier ou comme représenté sur les figures 14 et 15, en plusieurs parties 70, 72, 74 et 76 séparées par des espaces 78, 80, 82, 84. Le collier 20 présente également au moins deux pattes 86, 88, 90, 92 de guidage régulièrement réparties en périphérie du collier 20. Dans la forme de réalisation illustrée, le collier 20 comprend quatre pattes 86, 88, 90, 92 de guidage. Les pattes 86, 88, 90, 92 assurent une fonction de détrompage permettant à l'opérateur manipulant l'outil de ne pas se tromper de côté lors de la manipulation. Les pattes 86, 88, 90, 92 permettent aussi de guider le déplacement de la pièce 2 tubulaire mâle lorsqu'elle est insérée à l'intérieur du collier 20. Dans la forme de réalisation illustrée, les pattes 86, 88, 90, 92 présentent une forme globale parallélépipédique de section rectangulaire courbe dans le but de d'obtenir un centrage.

Comme vu plus haut, l'assemblage se fait à l'aveugle et est très souvent réalisé dans des environnements peu faciles d'accès. Pour permettre de vérifier que l'assemblage se fait correctement, le collier au moins au niveau des faces 34 cylindrique et 36 tronconique sont en matériau transparent. Il est ainsi possible pour l'opérateur de vérifier le bon comportement du joint lors de l'assemblage.

Il est décrit dans ce qui suit le procédé d'installation du joint lors de l'assemblage d'une pièce tubulaire à une autre. Le procédé d'installation décrit en premier lieu est celui réalisé en deux étapes en utilisant une pièce intermédiaire tel que le socle 52 puis en second lieu sans pièce intermédiaire lors de l'assemblage des pièces tubulaires directement l'une à l'autre.

Que ce soit dans l'une ou l'autre des alternatives présentées, le procédé d'installation du joint comprend les deux étapes suivantes réalisées de manière successives :
- compression du joint 6 installé sur la pièce 2 tubulaire mâle à l'aide de l'anneau 38 de compression de l'outil qui encercle la pièce mâle au moins au niveau de la gorge 8 et qui exerce une compression sur le joint ;
- insertion de la pièce 2 mâle dans la pièce 4 femelle à l'aide de l'outil 18 dont la languette 44 en saillie vers l'extérieur est positionnée au niveau de la surface intérieure de la pièce tubulaire femelle, la languette 44 étant mise en en contact avec la surface 14 chanfreinée de la pièce femelle.

Dans le cas d'une installation en deux phases illustrée sur les figures 3, 7 à 13, dans une première phase de préparation préliminaire, le collier 20 est positionné fermé sur le socle 8. Le collier 20 est posé sur le socle 52. Le ou les appendices 60 du collier s'emboitent dans les cavités 58 du socle 52 correspondantes. L'opérateur s'assure ainsi que le collier est placé dans le bon sens.

Une fois le collier maintenu en position sur le socle 52, l'embout 2 mâle est placé autour de la portion 64 de conduit tubulaire de l'outil 18. L'opérateur n'a alors plus qu'à le pousser doucement vers le bas. Cette opération pourrait être réalisée automatiquement à l'aide d'un piston adapté. La pente légère offerte par la face 36 tronconique du collier permet de comprimer progressivement le joint 6 jusqu'à la dimension souhaitée lorsque la gorge 8 arrive au niveau de l'anneau 38 de compression. Le déplacement de l'embout 2 mâle est interrompu et bloqué par la butée 66.

Dans une deuxième phase, comme représenté sur les figures 12 et 13, l'embout 2 mâle sur lequel le joint 6 est maintenu comprimé par le collier 20 est assemblé avec le tube 4 femelle par emboitement. Le collier 20 est en position sur la pièce tubulaire mâle. La pièce tubulaire mâle pourvue du collier est positionnée au niveau de la pièce tubulaire femelle de manière à ce que la languette vienne en contact avec la surface chanfreinée. L'opérateur pousse l'embout mâle à l'intérieur du tube femelle qu'il soit droit ou coudé comme montré sur les figures 12 et 13. La gorge 8 de l'embout mâle dans laquelle se trouve le joint 6 glisse sur la surface intérieure du collier 20 puis sur la surface intérieure du tube femelle sans subir de discontinuité, les surfaces étant au même niveau grâce à la languette 44. Le joint 6 est pré-comprimé par le collier 20 et la languette permet au joint de rester pré-comprimé jusqu'à complète pénétration dans la pièce tubulaire femelle, à savoir au-delà de la surface chanfreinée, à savoir des changements de forme de la surface intérieure de la pièce femelle. Lorsque l'embout mâle est assemblé à l'intérieur du tube femelle, la gorge 8 est placée entièrement à l'intérieur du tube femelle et le collier 20 peut être retiré à l'aide des moyens 26 de fermeture/ouverture soit ici en retirant une goupille 30.

Les figures 14 à 19 illustrent le procédé d'insertion du joint directement lors de l'assemblage d'une pièce tubulaire à une autre. Le collier 20 comprend dans ce cas des pattes 86, 88, 90, 92 permettant à la fois de repérer immédiatement le sens d'utilisation et de guider l'embout mâle à l'intérieur du tube femelle.

La jupe 68 du collier permet de le positionner autour du tube 4 femelle. L'embout 2 mâle est ensuite placé dans le collier retenu et guidé par les pattes 86, 88, 90, 92 de guidage. Lorsque l'embout 2 se déplace le long de la face 36 tronconique, le joint est progressivement comprimé. La pièce tubulaire mâle poursuit sa course, poussée par l'opérateur à l'intérieur de la pièce tubulaire femelle. La pente douce offerte par la face tronconique du collier permet de comprimer progressivement le joint jusqu'à la dimension souhaitée lorsque la gorge de la pièce tubulaire mâle arrive au niveau de l'anneau de compression du collier 20. La gorge de l'embout mâle dans laquelle se trouve le joint glisse sur la surface intérieure du collier et plus précisément sur la face 36 tronconique puis 34 cylindrique puis sur la surface intérieure chanfreinée de la pièce tubulaire femelle sans discontinuité, les surfaces étant affleurantes grâce à la forme de la languette complémentaire de la forme de la surface chanfreinée extrémale de la pièce tubulaire femelle. Lorsque l'embout mâle est assemblé à l'intérieur de la pièce tubulaire femelle, la gorge est placée entièrement à l'intérieur de la pièce tubulaire femelle au-delà de la surface chanfreinée et le collier peut être retiré à l'aide des moyens de fermeture/ouverture soit ici en retirant la goupille 30.

Au fur et à mesure de l'assemblage, il est possible pour l'opérateur de vérifier l'état du joint du fait du matériau transparent utilisé pour le collier. L'outil peut être conçu ou s'adapter à tout type de diamètre de pièces.

## Revendications

1. Outil d'installation d'un joint (6) d'étanchéité annulaire destiné à assurer l'étanchéité entre deux pièces tubulaires mâle (2) et femelle (4), la pièce mâle (2) étant pourvue d'une gorge (8) dans laquelle le joint (6) est inséré et l'extrémité de la pièce femelle étant chanfreinée, **caractérisé en ce que** l'outil (18) comprend un collier (20) de serrage présentant une face (34) intérieure cylindrique de surface plane formant un anneau (38) dit de compression destinée à encercler la pièce mâle au moins au niveau de la gorge (8) et à exercer une compression sur le joint (6), les deux extrémités du collier (20) étant l'une appelée extrémité femelle (40) car destinée à venir en contact avec la pièce femelle et l'autre extrémité mâle (42), l'extrémité femelle du collier présentant une languette (44) en saillie vers l'extérieur dont l'une des faces fait partie de la face (34) intérieure cylindrique du collier (20), la languette présentant une forme lui permettant de venir en contact avec la surface chanfreinée de la pièce (4) femelle.

2. Outil selon la revendication 1, **caractérisé en ce que** la languette (44) présente une forme telle que l'extrémité de la languette (44) affleure la surface intérieure de la pièce (4) femelle au-delà de la surface chanfreinée lorsque l'outil est installé sur la pièce (4) femelle et que la languette (44) est en contact avec la surface chanfreinée de la pièce (4) femelle.

3. Outil selon l'une des revendications 1 ou 2, **caractérisé en ce que** le diamètre intérieur de l'extrémité de la languette (44) est identique au diamètre intérieur de la pièce (4) femelle.

4. Outil selon l'une des revendications 1 à 3, **caractérisé en ce que** la languette (44) présente une forme de prisme à angle droit dont la face (46) latérale plane opposée à l'angle droit est destinée à venir en contact avec la surface (14) chanfreinée.

5. Outil selon l'une des revendications 1 ou 4, **caractérisé en ce que** le collier (20) présente une face (34) intérieure tronconique dont le rayon décroît depuis l'extrémité mâle (42) jusqu'à la face (34) cylindrique.

6. Outil selon l'une des revendications 1 ou 5, **caractérisé en ce qu'**il comprend un socle (52) indépendant du collier (20) présentant une forme permettant de maintenir le collier dans une position permettant l'accouplement avec la pièce mâle et une surface (54) plane de base permettant de reposer sur une surface (56) de manière telle que l'axe X-X de l'anneau (38) soit perpendiculaire au plan de ladite surface (56).

7. Outil selon la revendication 6, **caractérisé en ce que** le socle (52) présente une cavité (58) de forme complémentaire à un appendice (60) prévu sur l'extrémité (40) femelle du collier de manière à maintenir le collier en position sur le socle.

8. Outil selon l'une des revendications 1 à 5, **caractérisé en ce que** au moins deux pattes (86, 88, 90, 92) de guidage sont prévus régulièrement répartis en périphérie du collier.

9. Outil selon l'une des revendications 1 à 8, **caractérisé en ce que** au moins les faces (34) cylindrique et (36) tronconique du collier sont en matériau transparent.

10. Outil selon l'une des revendications 1 à 9, **caractérisé en ce que** le collier (20) de serrage comprend au moins deux portions (22, 24) articulées entre elles et reliées par un mécanisme de fermeture/ouverture.

11. Procédé d'installation d'un joint (6) d'étanchéité annulaire destiné à assurer l'étanchéité entre deux pièces tubulaires mâle (2) et femelle (4), la pièce mâle (2) étant pourvue d'une gorge (8) dans laquelle le joint (6) est inséré et l'extrémité de la pièce (4) femelle étant chanfreinée, **caractérisé en ce que** le procédé comprend les étapes suivantes :
- compression du joint (6) installé sur la pièce mâle (2) à l'aide d'un outil (18) comprenant un collier (20) de serrage présentant une face intérieure cylindrique (34) de surface plane formant un anneau (38) dit de compression destinée à encercler la pièce mâle au moins au niveau de la gorge (8) et à exercer une compression sur le joint, les deux extrémités du collier étant l'une appelée extrémité (40) femelle car destinée à venir en contact avec la pièce femelle et l'autre extrémité (42) mâle ;
- insertion de la pièce (2) mâle dans la pièce femelle à l'aide du collier (20) dont l'extrémité (40) femelle présente une languette (44) en saillie vers l'extérieur dont l'une des faces fait partie de la face intérieure cylindrique (34) du collier, la languette (44) étant mise en en contact avec la surface (14) chanfreinée de la pièce femelle.

12. Procédé d'installation selon la revendication 11, **caractérisé en ce qu'**il comprend une étape de préparation préliminaire dans laquelle le collier (20) est positionné fermé sur un socle (52) avant l'étape de compression du joint (6) obtenu par l'introduction de la pièce (2) mâle à l'intérieur du collier (20).

## Patentansprüche

1. Werkzeug zum Einbau einer ringförmigen Dichtung (6) zur Sicherstellung der Dichtheit zwischen zwei Rohrstücken, einem eingreifenden (2) und einem aufnehmenden (4), wobei das eingreifende Stück (2) mit einer Nut (8) versehen ist, in welche die Dichtung (6) eingeführt wird, und das Ende des aufnehmenden Stücks abgeschrägt ist, **dadurch gekennzeichnet, dass** das Werkzeug (18) eine Klemmschelle (20) umfasst, die eine zylinderförmige Innenfläche (34) mit ebener Oberfläche aufweist, die einen Pressring (38) bildet, die dazu bestimmt ist, das eingreifende Stück zumindest an der Nut (8) zu umschließen und eine Druckbelastung auf die Dichtung (6) auszuüben, wobei das eine der beiden Enden der Schelle (20) als aufnehmendes Ende (40) bezeichnet wird, da es dazu bestimmt ist, mit dem aufnehmenden Stück in Kontakt zu treten, und das andere als eingreifendes Ende (42), wobei das aufnehmende Ende der Schelle eine Lasche (44) aufweist, die nach außen absteht, deren eine Fläche zur zylinderförmigen Innenfläche (34) der Schelle (20) gehört, wobei die Lasche eine Form aufweist, die es ihr gestattet, mit der abgeschrägten Oberfläche des aufnehmenden Stücks (4) in Kontakt zu treten.

2. Werkzeug nach Anspruch 1, **dadurch gekennzeichnet, dass** die Lasche (44) eine derartige Form aufweist, dass das Ende der Lasche (44) die innere Oberfläche des aufnehmenden Stücks (4) über die abgeschrägte Oberfläche hinaus berührt, wenn das Werkzeug an dem aufnehmenden Stück (4) angebracht ist, und dass die Lasche (44) mit der abgeschrägten Fläche des aufnehmenden Stücks (4) in Kontakt steht.

3. Werkzeug nach einem der Ansprüche 1 oder 2, **dadurch gekennzeichnet, dass** der Innendurchmesser des Endes der Lasche (44) mit dem Innendurchmesser des aufnehmenden Stücks (4) identisch ist.

4. Werkzeug nach einem der Ansprüche 1 bis 3, **dadurch gekennzeichnet, dass** die Lasche (44) eine Form eines Prismas mit rechtem Winkel aufweist, dessen ebene Seitenfläche (46), die dem rechten Winkel gegenüberliegt, dazu bestimmt ist, mit der abgeschrägten Oberfläche (14) in Kontakt zu treten.

5. Werkzeug nach einem der Ansprüche 1 oder 4, **dadurch gekennzeichnet, dass** die Schelle (20) eine kegelstumpfförmige Innenfläche (36) aufweist, deren Radius von dem eingreifenden Ende (42) bis zur zylinderförmigen Fläche (34) abnimmt.

6. Werkzeug nach einem der Ansprüche 1 oder 5, **dadurch gekennzeichnet, dass** es einen von der Schelle (20) unabhängigen Sockel (52) umfasst, der eine Form aufweist, die es gestattet, die Schelle in einer Position zu halten, die die Kopplung mit dem eingreifenden Stück gestattet, und eine ebene Grundfläche (54), die es gestattet, auf einer Oberfläche (56) zu ruhen, so dass die Achse X-X des Rings (38) senkrecht zu der Ebene der Oberfläche (56) verläuft.

7. Werkzeug nach Anspruch 6, **dadurch gekennzeichnet, dass** der Sockel (52) einen Hohlraum (58) mit einer Form aufweist, die zu einem Fortsatz (60) komplementär ist, der auf dem aufnehmenden Ende (40) der Schelle vorgesehen ist, um die Schelle auf dem Sockel in Position zu halten.

8. Werkzeug nach einem der Ansprüche 1 bis 5, **dadurch gekennzeichnet, dass** mindestens zwei Führungsansätze (86, 88, 90, 92) regelmäßig verteilt am Rand der Schelle vorgesehen sind.

9. Werkzeug nach einem der Ansprüche 1 bis 8, **dadurch gekennzeichnet, dass** zumindest die zylinderförmige (34) und die kegelstumpfförmige (36) Fläche der Schelle aus transparentem Material sind.

10. Werkzeug nach einem der Ansprüche 1 bis 9, **dadurch gekennzeichnet, dass** die Klemmschelle (20) mindestens zwei Abschnitte (22, 24) umfasst, die aneinander angelenkt durch einen Öffnungs-/Schließmechanismus verbunden sind.

11. Verfahren zum Einbau einer ringförmigen Dichtung (6) zur Sicherstellung der Dichtheit zwischen zwei Rohrstücken, einem eingreifenden (2) und einem aufnehmenden (4), wobei das eingreifende Stück (2) mit einer Nut (8) versehen ist, in welche die Dichtung (6) eingeführt wird, und das Ende des aufnehmenden Stücks (4) abgeschrägt ist, **dadurch gekennzeichnet, dass** das Verfahren die folgenden Schritte umfasst:
- Zusammendrücken der Dichtung (6), die an dem eingreifenden Stück (2) eingebaut ist, mithilfe eines Werkzeugs (18) umfassend eine Klemmschelle (20), die eine zylinderförmige Innenfläche (34) mit ebener Oberfläche aufweist, die einen Pressring (38) bildet, die dazu bestimmt ist, das eingreifende Stück zumindest an der Nut (8) zu umschließen und eine Druckbelastung auf die Dichtung auszuüben, wobei das eine der beiden Enden der Schelle als aufnehmendes Ende (40) bezeichnet wird, da es dazu bestimmt ist, mit dem aufnehmenden Stück in Kontakt zu treten, und das andere als eingreifendes Ende (42) ;
- Einfügen des eingreifenden Stücks (2) in das aufnehmende Stück mithilfe der Schelle (20), deren aufnehmendes Ende (40) eine Lasche (44) aufweist, die nach außen absteht, deren eine Fläche zur zylinderförmigen Innenfläche (34) der Schelle gehört, wobei die Lasche (44) mit der abgeschrägten Oberfläche (14) des aufnehmenden Stücks in Kontakt gebracht wird.

12. Verfahren zum Einbau nach Anspruch 11, **dadurch gekennzeichnet, dass** es einen vorausgehenden Vorbereitungsschritt umfasst, wobei die Schelle (20) vor dem Schritt des Zusammendrückens der Dichtung (6), die durch Einführen des eingreifenden Stücks (2) in die Schelle (20) erhalten wird, geschlossen auf einem Sockel (52) positioniert wird.

## Claims

1. Tool for installing an annular seal (6) intended to ensure the seal-tightness between two tubular parts, one male (2) and one female (4), the male part (2) being provided with a groove (8) into which the seal (6) is inserted and the end of the female part being chamfered, **characterized in that** the tool (18) comprises a clamping band (20) having a cylindrical inner face (34) of planar surface forming a so-called compression ring (38) intended to encircle the male part at least at the groove (8) and to exert a compression on the seal (6), one of the two ends of the band (20) being called female end (40) because it is intended to come into contact with the female part and the other being called male end (42), the female end of the band having a tongue (44) protruding outwards of which one of the faces forms part of the cylindrical inner face (34) of the band (20), the tongue having a form allowing it to come into contact with the chamfered surface of the female part (4).

2. Tool according to Claim 1, **characterized in that** the tongue (44) has a form such that the end of the tongue (44) is flush with the inner surface of the female part (4) beyond the chamfered surface when the tool is installed on the female part (4) and the tongue (44) is in contact with the chamfered surface of the female part (4) .

3. Tool according to either of Claims 1 and 2, **characterized in that** the inner diameter of the end of the tongue (44) is identical to the inner diameter of the female part (4).

4. Tool according to one of Claims 1 to 3, **characterized in that** the tongue (44) has a right-angled prism form of which the planar lateral face (46) opposite the right angle is intended to come into contact with the chamfered surface (14).

5. Tool according to either of Claims 1 and 4, **characterized in that** the band (20) has a tapered inner face (36), the radius of which decreases from the male end (42) to the cylindrical face (34).

6. Tool according to one of Claims 1 and 5, **characterized in that** it comprises a base (52) independent of the band (20) having a form making it possible to hold the band in a position allowing the coupling with the male part and a base planar surface (54) allowing it to rest on a surface (56) such that the axis X-X of the ring (38) is at right angles to the plane of the said surface (56).

7. Tool according to Claim 6, **characterized in that** the base (52) has a cavity (58) of a form complementing an appendage (60) provided on the female end (40) of the band so as to hold the band in position on the base.

8. Tool according to one of Claims 1 to 5, **characterized in that** at least two guiding tabs (86, 88, 90, 92) are provided distributed at regular intervals at the periphery of the band.

9. Tool according to one of Claims 1 to 8, **characterized in that** at least the cylindrical (34) and tapered (36) faces of the band are made of transparent material.

10. Tool according to one of Claims 1 to 9, **characterized in that** the clamping band (20) comprises at least two mutually articulated portions (22, 24) linked by a closing/opening mechanism.

11. Method for installing an annular seal (6) intended to ensure the seal-tightness between two tubular parts, one male (2) and one female (4), the male part (2) being provided with a groove (8) into which the seal (6) is inserted and the end of the female part (8) being chamfered, **characterized in that** the method comprises the following steps:
- compression of the seal (6) installed on the male part (2) using a tool (18) comprising a clamping band (20) having a cylindrical inner face (34) of planar surface forming a so-called compression ring (38) intended to encircle the male part at least at the groove (8) and to exert a compression on the seal, one of the two ends of the band being called female end (40) because it is intended to come into contact with the female part and the other being called male end (42);
- insertion of the male part (2) into the female part using the band (20), the female end (40) of which has a tongue (44) protruding outwards of which one of the faces forms part of the cylindrical inner face (34) of the band, the tongue (44) being placed in contact with the chamfered surface (14) of the female part.

12. Installation method according to Claim 11, **characterized in that** it comprises a preliminary preparation step in which the band (20) is positioned closed on a base (52) before the step of compression of the seal (6) obtained by the introduction of the male part (2) into the band (20).
